# EUROPÄISCHE PATENTSCHRIFT

(11) **EP 3 165 430 B1**
(45) Veröffentlichungstag und Bekanntmachung des Hinweises auf die Patenterteilung: **11.09.2019**
(21) Anmeldenummer: 16002247.1
(22) Anmeldetag: 19.10.2016
(51) Int. Cl.: B62D 27/02, B62D 29/04, B29C 65/48, B29C 65/56, B29L 31/30

(54) **VERFAHREN ZUR HERSTELLUNG EINER KNOTENSTRUKTUR MIT WENIGSTENS ZWEI PROFILBAUTEILEN, SOWIE KNOTENSTRUKTUR UND KAROSSERIE**
METHOD FOR PRODUCING A NODE STRUCTURE WITH AT LEAST TWO PROFILE MEMBERS, AND NODE STRUCTURE AND BODY
PROCÉDÉ DE FABRICATION D'UNE STRUCTURE DE LIAISON COMPRENANT AU MOINS DEUX COMPOSANTS PROFILÉS, ET STRUCTURE DE LIAISON ET CARROSSERIE

(30) Priorität: 06.11.2015 DE 102015014358
(43) Veröffentlichungstag der Anmeldung: 10.05.2017
(73) Patentinhaber: AUDI AG, 85045 Ingolstadt (DE)
(72) Erfinder: Eidmann, Florian, DE - 74613 Öhringen (DE); Schauerte, Oliver, DE - 74206 Bad Wimpfen (DE); Durst, Karl, DE - 91790 Bergen (DE)
(74) Vertreter: Eickmeyer, Dietmar

(56) Entgegenhaltungen:
- WO-A1-02/02292
- WO-A1-2012/062391
- DE-A1-102005 061 474
- DE-A1-102011 107 212
- DE-A1-102012 112 313
- DE-A1-102013 220 209
- DE-C1- 4 423 642

## Beschreibung

Die Erfindung betrifft ein Verfahren zur Herstellung einer Knotenstruktur mit wenigstens zwei, insbesondere aus Faserkunststoffverbundmaterial gebildeten, Profilbauteilen. Die Erfindung betrifft ferner eine Knotenstruktur und eine Fahrzeugkarosserie.

Aus Profilen gebildete Karosseriestrukturen sind aus dem Stand der Technik bekannt. So beschreibt bspw. die DE 44 23 642 C1 einen Kraftfahrzeug-Tragrahmen, der aus einzelnen, getrennt voneinander vorgefertigten Rahmenprofilteilen zusammengesetzt ist. Die Rahmenprofilteile können jeweils als Faserverbund-Profilstücke mit einem beispielsweise rechteckigen Hohlprofilquerschnitt ausgebildet sein und sind im konsolidierten bzw. ausgehärteten Zustand jeweils über Knotenstücke, welche ebenfalls aus Faserverbundwerkstoff bestehen, fachwerkartig zu einer integralen Rahmenstruktur verbunden. Zur Fertigung eines Knotenstücks werden die zu verbindenden Rahmenprofilteile in die Aufnahmetaschen eines vorgefertigten Faservorformlings eingesetzt. In einem Formwerkzeug wird dann unter Druck- und Wärmeeinwirkung das Knotenstück erzeugt. Die WO 2012/062391 zeigt ein Verfahren zum Verbinden von zumindest zwei Halbzeug-Bauteilen aus einem Faser-Kunststoffverbund, mittels eines Knotenelements aus einem Gussmaterial, wobei die Halbzeug-Bauteile an ihren zu verbindenden Enden in eine Kavität gelegt werden, die eine Form zur Ausbildung des Knotenelements bereitstellt, Das Gussmaterial wird nach dem Schließen der Gussform in die Kavität eingebracht und angegossen.

Ausgehend von diesem Stand der Technik lag der Erfindung die Aufgabe zugrunde, ein verbessertes Verfahren zur Herstellung einer Knotenstruktur anzugeben.

Diese Aufgabe wird gelöst durch ein erfindungsgemäßes Verfahren mit den Merkmalen des Patentanspruchs 1.

Mit einem nebengeordneten Patentanspruch erstreckt sich die Erfindung auch auf eine erfindungsgemäße Knotenstruktur, die insbesondere mit dem erfindungsgemäßen Verfahren hergestellt ist.

Mit einem weiteren nebengeordneten Patentanspruch erstreckt sich die Erfindung auch auf eine Fahrzeugkarosserie, insbesondere für einen Personenkraftwagen, mit einem aus Profilbauteilen gebildeten Rahmen (Space Frame) und mit wenigstens einer erfindungsgemäßen Knotenstruktur. Bevorzugt sind mehrere einen Rahmenabschnitt (bspw. die Hinterwagen-, Vorderwagen- oder Mittelwagenstruktur) bildende Profilbauteile aus Faserkunststoffverbundmaterial gebildet. Insbesondere handelt es sich dabei ausschließlich um Hohlprofilbauteile, die mittels erfindungsgemäßer Knotenstrukturen miteinander verbunden sind.

Weiterbildungen und Ausgestaltungen der Erfindung ergeben sich analog für alle Erfindungsgegenstände aus den abhängigen Patentansprüchen, aus der nachfolgenden Beschreibung und auch aus den Figuren.

Das erfindungsgemäße Verfahren zur Herstellung einer Knotenstruktur mit wenigstens zwei, insbesondere aus Faserkunststoffverbundmaterial gebildeten, Profilbauteilen, die an einem ihrer Profilenden in einem Verbindungsknoten miteinander verbunden werden sollen, umfasst zumindest die folgenden Schritte:
- Bereitstellen der vorgefertigten Profilbauteile, die an ihren zu verbindenden (knotenseitigen) Profilenden mit korrespondierenden Stoßflächen ausgebildet sind;
- Positionieren der Profilenden in einem den Verbindungsknoten erzeugenden Presswerkzeug, so dass zwischen den Stoßflächen ein homogener Beabstandungsspalt besteht, wobei der Beabstandungsspalt (S) ein Spaltmaß von 0,25 mm bis 3 mm aufweist;
- Ausführen eines Pressvorgangs unter Zugabe von kurzfaserhaltiger Kunststoffmasse zur Erzeugung eines die Profilenden formschlüssig und gegebenenfalls auch stoffschlüssig verbindenden Verbindungsknotens, wobei die kurz- faserhaltige Kunststoffmasse vor dem Schließen des Presswerkzeugs in dessen Werkzeugkavität eingebracht wird und beim Pressvorgang auch in den Beabstandungsspalt zwischen den Stoßflächen eindringt.

Die in einem Verbindungsknoten zu verbindenden Profilenden der Profilbauteile sind mit korrespondierenden Stoßflächen ausgebildet, worunter im Verbindungsknoten einander zugewandte bzw. sich gegenüberstehende Flächenabschnitte verstanden werden, die im Belastungsfall insbesondere auch als Kraftübertragungsflächen dienen. Die korrespondierenden Stoßflächen können bspw. als gerade Schrägflächen, als konkave und konvexe Flächen (oder zumindest mit konkaven oder konvexen Flächenanteilen), als gewellte Flächen, als gestufte Flächen und/oder als verschachtelbare Flächen ausgebildet sein, was Gegenstand bevorzugter Weiterbildungen ist.

Der Beabstandungsspalt zwischen diesen Stoßflächen ermöglicht, dass während des Pressvorgangs die zur Erzeugung des Verbindungsknotens verwendete faserhaltige Kunststoffmasse auch zwischen diese Stoßflächen gepresst wird, so dass die knotenseitigen Profilenden von der faserhaltigen Kunststoffmasse optimal umformt und dadurch form- und gegebenenfalls auch stoffschlüssig eingebunden werden. Ein homogener bzw. gleichmäßiger Beabstandungsspalt gewährleistet, dass die faserhaltige Kunststoffmasse den Beabstandungsspalt vollständig ausfüllen kann und dass an jeder Stelle des Beabstandungsspalts im Wesentlichen gleiche Verbindungseigenschaften entstehen. (Ein ungleichmäßiger Beabstandungsspalt könnte bei Belastung der hergestellten Knotenstruktur bspw. zu unsymmetrischen Kraftflüssen führen.)

Die Erfindung weist viele Vorteile auf. Bspw. wird bei dem erfindungsgemäßen Verfahren kein vorgefertigter Faservorformling, wie in der DE 44 23 642 C1 beschrieben, benötigt. Ferner weist eine mit dem erfindungsgemäßen Verfahren hergestellte Knotenstruktur bei geringem Gewicht eine hervorragende Festigkeit, Steifigkeit und Crashstabilität auf.

Bevorzugt weist der Beabstandungsspalt ein im Wesentlichen konstantes Spaltmaß von wenigstens 0,5 mm und höchstens 2,0 mm auf. Das minimale Spaltmaß von wenigstens 0,5 mm gewährleistet einen fließfähigen Abstand zwischen den Stoßflächen, so dass die im Presswerkzeug positionierten Profilenden von der faserhaltigen Kunststoffmasse optimal umformt und dadurch form-/stoffschlüssig eingebunden werden können. Das maximale Spaltmaß von höchstens 2,0 mm gewährleistet, dass im erzeugten Verbindungsknoten die Kraftflusswege zwischen den verbundenen Profilenden bzw. deren Stoßflächen kurz sind.

Nach dem Aushärten der faserhaltigen Kunststoffmasse kann das Presswerkzeug geöffnet und die hergestellte Knotenstruktur entnommen werden. Diese Knotenstruktur umfasst wenigstens zwei, insbesondere aus Faserkunststoffverbundmaterial gebildete, Profilbauteile und einen aus Faserkunststoffverbundmaterial bzw. faserhaltiger und insbesondere kurzfaserhaltiger Kunststoffmasse gebildeten Verbindungsknoten, in dem die Profilbauteile an einem ihrer Profilenden (bzw. an ihren knotenseitigen Profilenden) formschlüssig und gegebenenfalls auch stoffschlüssig miteinander verbunden sind, wobei die im Verbindungsknoten verbundenen Profilenden mit korrespondierenden Stoßflächen ausgebildet sind und diese Stoßflächen durch einen homogenen (d. h. im Wesentlichen mit konstanter Spaltbreite ausgebildeten) und mit faserhaltiger Kunststoffmasse aufgefüllten Beabstandungsspalt zueinander beabstandet sind. Bei der Knotenstruktur handelt es sich demnach um ein Zusammenbauteil (ZSB-Teil) aus wenigstens zwei Profilbauteilen.

Unter einem Profilbauteil wird ein langgestrecktes, stangenartiges Bauteil mit einer definierten Querschnittsform (Profil) verstanden, das einen geraden oder auch gekrümmten bzw. gebogenen axialen Verlauf aufweisen kann. Bei wenigstens einem Profilbauteil kann es sich auch um ein rohrartiges Hohlprofilbauteil mit geschlossenem Querschnitt und mit wenigstens einer Profilkammer handeln. Die betreffenden Profil- und Hohlprofilbauteile sind insbesondere aus konsolidiertem Faserkunststoffverbundmaterial gebildet. Bei den Fasern kann es sich um Kohlenstofffasern, Glasfasern und/oder sonstige Fasern handeln. Bevorzugt handelt es sich um Langfasern, die, bspw. auch in einem Lageaufbau, lastpfadgerecht angeordnet sind. Bei dem Kunststoffmaterial (Matrixmaterial) kann es sich um einen duroplastischen oder thermoplastischen Kunststoff handeln.

Bei den Profilbauteilen handelt es sich um vorgefertigte Bauteile, die in einem vorausgehenden Fertigungsprozess, gegebenenfalls auch bei einem Zulieferer, hergestellt werden. Das Bereitstellen dieser Bauteile umfasst z. B. das Konfektionieren, das Herrichten, das Reinigen und/oder das Prüfen der zu verbindenden Profilbauteile. Das Bereitstellen umfasst gegebenenfalls auch das Erzeugen der Stoßflächen, bspw. durch mechanische Bearbeitung, insbesondere durch Schneiden und/oder Fräsen, wobei die Stoßflächen spätestens vor dem Einlegen und Positionieren der Profilenden im Presswerkzeug erzeugt sein müssen.

Bevorzugt werden die Profilbauteile aus vorgefertigten Profilhalbzeugen (insbesondere Stangenware) hergestellt. Ebenso ist jedoch auch eine unmittelbare Herstellung der Profile bzw. Profilbauteile, bspw. mittels Pultrusion (oder gegebenenfalls auch mittels Wickeln oder Flechten), denkbar. Die Profilbauteile können aus dem selben Faserkunststoffverbundmaterial oder aus unterschiedlichen Faserkunststoffverbundmaterialien gebildet sein.

Bevorzugt handelt es sich bei wenigstens einem Profilbauteil einer erfindungsgemäßen Knotenstruktur um ein aus Faserkunststoffverbundmaterial gebildetes Hohlprofilbauteil. Insbesondere handelt es bei allen Profilbauteilen einer erfindungsgemäßen Knotenstruktur um aus Faserkunststoffverbundmaterial gebildete Hohlprofilbauteile.

Bei der den Verbindungsknoten erzeugenden Kunststoffmasse kann es sich um einen duroplastischen Kunststoff (Harz) oder einen thermoplastischen Kunststoff handeln. Bei den Fasern handelt es sich bevorzugt um Kurzfasern (Kohlenstofffasern, Glasfasern und/oder sonstige Fasern, auch Mischfasern und insbesondere auch Recyclingfasern) mit einer Länge von bspw. 1 mm bis 100 mm, bevorzugt von 2 mm bis 50 mm und insbesondere von 3 mm bis 25 mm. Bevorzugt ist die zur Erzeugung des Verbindungsknotens verwendete faserhaltige Kunststoffmasse auf das Faserkunststoffverbundmaterial der zu verbindenden Profilbauteile bzw. Hohlprofilbauteile abgestimmt.

Die faserhaltige Kunststoffmasse zur Erzeugung des Verbindungsknotens kann vor dem Schließen des Presswerkzeugs in die Werkzeugkavität eingebracht werden. Die faserhaltige Kunststoffmasse zur Erzeugung des Verbindungsknotens kann auch nach dem Schließen des Presswerkzeugs durch Injektion in die Werkzeugkavität eingebracht werden (ähnlich der Spritzgieß- bzw. der RTM-Technologie).

Wie bereits oben beschrieben, kann wenigstens eines der Profilbauteile ein Hohlprofilbauteil sein, wobei insbesondere vorgesehen ist, dass das knotenseitige offene Profilende dieses Hohlprofilbauteils mittels eines Verschlusselements verschlossen wird, um während des Pressvorgangs ein Eindringen der faserhaltigen Kunststoffmasse in das Hohlprofilbauteil zu verhindern. Bei dem spätestens vor dem Einlegen und Positionieren des Hohlprofilbauteils in das Presswerkzeug anzubringenden Verschlusselement kann es sich bspw. um einen, insbesondere aus Faserkunststoffverbundmaterial gebildeten, Deckel oder um ein pfropfartiges Verschlusselement aus einem Kunststoffschaummaterial, das insbesondere in das offene Profilende eingeklebt wird, handeln.

Die mit dem erfindungsgemäßen Verfahren in einem Verbindungsknoten zu verbindenden Profilbauteile und/oder Hohlprofilbauteile können zumindest an ihren zu verbindenden Profilenden bzw. an ihren knotenseitigen Endabschnitten mit unterschiedlichen Querschnitten bzw. Querschnittsabmessungen und/oder mit unterschiedlichen Wandstärken bzw. Wanddicken ausgebildet sein.

Die Erfindung wird nachfolgend beispielhaft und in nicht einschränkender Weise anhand der schematischen Figuren näher erläutert. Die in den Figuren gezeigten und/oder nachfolgend erläuterten Merkmale können, auch unabhängig von bestimmten Merkmalskombinationen, die Erfindung weiterbilden.
- Fig. 1: zeigt in einer perspektivischen Darstellung eine aus Hohlprofilbauteilen gebildete Hinterwagenstruktur.
- Fig. 2: zeigt in einer perspektivischen Darstellung eine zur Hinterwagenstruktur der Fig. 1 gehörende Knotenstruktur.
- Fig. 3: zeigt in mehreren Schnittdarstellungen mögliche Ausgestaltungen von Stoßflächen an zwei miteinander zu verbindenden Hohlprofilenden bei der Herstellung der Knotenstruktur aus Fig. 2.
- Fig. 4: zeigt in einer Schnittdarstellung mögliche Ausgestaltungen von Stoßflächen an drei miteinander zu verbindenden Hohlprofilenden bei der Herstellung der Knotenstruktur aus Fig. 2.
- Fig. 5: veranschaulicht in mehreren Schnittdarstellungen die Erzeugung des Verbindungsknotens bei der Herstellung der Knotenstruktur aus Fig. 2.

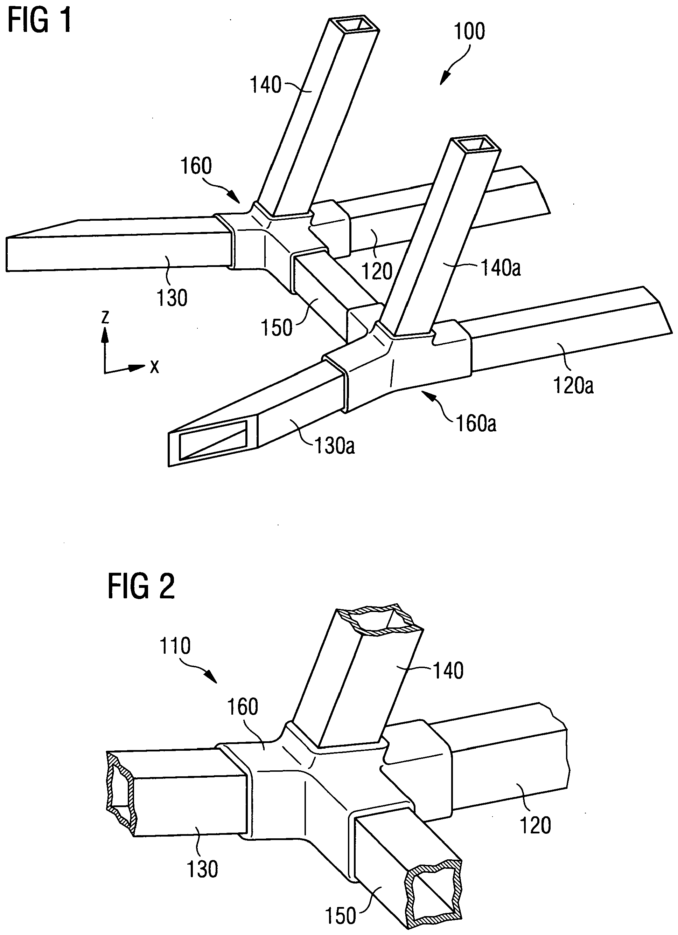

Die in Fig. 1 gezeigte Wagenstruktur bzw. Hinterwagenstruktur 100 ist Teil eines Rahmens einer Fahrzeugkarosserie. Die Hinterwagenstruktur 100 umfasst mehrere aus Faserkunststoffverbundmaterial gebildete und getrennt voneinander vorgefertigte Hohlprofilbauteile 120, 120a, 130, 130a, 140, 140a und 150, wobei es sich insbesondere um sogenannte Pultrusionsprofile handelt, deren Profilenden an Verbindungsknoten bzw. Knotenstellen 160 und 160a fest miteinander verbunden sind. Typischerweise sind die Hohlprofilbauteile 120, 120a, 130, 130a, 140, 140a und 150 unterschiedlich ausgebildet, d. h., diese weisen je nach Belastung unterschiedliche Querschnitte und/oder Wanddicken auf und/oder sind aus unterschiedlichen Faserkunststoffverbundmaterialien gebildet. Die Hinterwagenstruktur 100 kann ferner Vollprofilbauteile und/oder aus anderen Materialien (bspw. auch Metall) gebildete Profilbauteile aufweisen, die insbesondere auch über die Verbindungsknoten 160 bzw. 160a in die Rahmenstruktur 100 eingebunden sind. Die Hinterwagenstruktur 100 verfügt trotzt ihres geringen Gewichts über eine hervorragende Festigkeit, Steifigkeit und Crashstabilität.

Die in einem Verbindungsknoten 160 bzw. 160a verbundenen Hohlprofilbauteile bilden zusammen mit diesem Verbindungsknoten eine Knotenstruktur im Sinne der Erfindung. Fig. 2 zeigt eine solche Knotenstruktur 110 für den in Fahrtrichtung x links liegenden Rahmenbereich. Die integrale Knotenstruktur 110 umfasst mehrere Hohlprofilbauteile 120, 130, 140 und 150, deren Profilenden in einem Verbindungsknoten 160 fest miteinander verbunden sind.

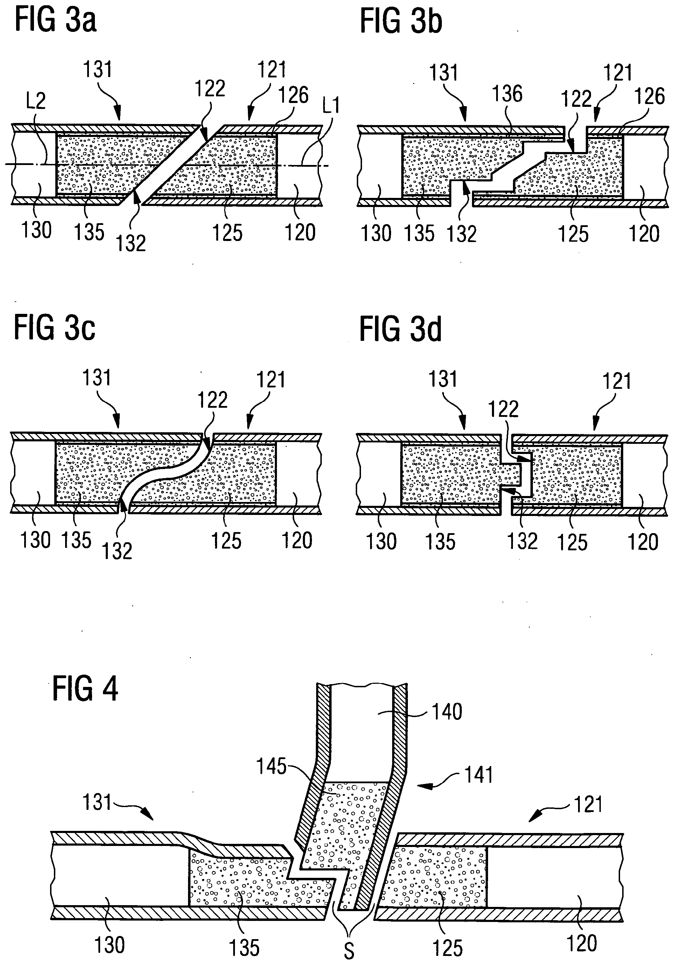

Anhand der Fig. 3, 4 und 5 wird nachfolgend die Herstellung einer solchen Knotenstruktur 110 erläutert, wobei ohne Einschränkung und lediglich zum Zwecke einer vereinfachenden Darstellung und Beschreibung im Wesentlichen nur auf die Verbindung der beiden Hohlprofilbauteile 120 und 130 eingegangen wird. Die Hohlprofilbauteile 120 und 130 können, anders als dargestellt, zumindest an ihren zu verbindenden Profilenden bzw. an ihren knotenseitigen Endabschnitten 121 und 131 mit unterschiedlichen Querschnitten bzw. Querschnittsabmessungen und/oder mit unterschiedlichen Wandstärken bzw. Wanddicken ausgebildet sein.

Erfindungsgemäß sind die knotenseitig zu verbindenden Profilenden mit korrespondierenden Stoßflächen ausgebildet. Die Fig. 3a-d zeigen die Profilenden 121 und 131 der Hohlprofilbauteile 120 und 130 mit unterschiedlich ausgestalteten Stoßflächen 122 und 132. Die offenen Profilenden 121 und 131 der zu verbindenden Hohlprofilbauteile 120 und 130 sind mittels Klebstoff 126 bzw. 136 eingeklebter Verschlusselemente 125 und 135 verschlossen. Die Verschlusselemente 125 und 135 sind aus einem Kunststoffschaummaterial, insbesondere einem temperatur- und druckbeständigem Hartschaum, gebildet. Die Stoßflächen 122 und 132 werden bevorzugt erst nach dem Einkleben dieser Verschlusselemente 125 und 135 erzeugt, insbesondere durch mechanische Bearbeitung wie bspw. Schneiden und/oder Fräsen. Dieser Vorgang kann auch als Konturieren der Profilenden bezeichnet werden.

Bei der in Fig. 3a gezeigten Ausführungsmöglichkeit sind die knotenseitigen Profilenden abgeschrägt, d. h. die Stoßflächen 122 und 132 an den Profilenden 121 und 131 sind als gerade Schrägflächen ausgebildet. Die knotenseitigen Schrägflächen 122 und 132 erstrecken sich schräg (im Sinne von nichtrechtwinkelig) zu den Längsachsen L1 und L2 der Hohlprofilbauteile 120 und 130. Bei der in Fig. 3b gezeigten Ausführungsmöglichkeit sind die Stoßflächen 122 und 132 als gegensätzlich gestufte Flächen ausgebildet. Bei der in Fig. 3c gezeigten Ausführungsmöglichkeit sind die Stoßflächen 122 und 132 als gewellte Flächen mit korrespondierenden Wellenkonturen (die konkave und konvexe Flächenanteile aufweisen) ausgebildet. Bei der in Fig. 3d gezeigten Ausführungsmöglichkeit sind die Stoßflächen 122 und 132 als ineinander verschachtelbare Flächen ausgebildet.

Fig. 3a-d zeigen die korrespondierenden Stoßflächen 122 und 132 an den zu verbindenden Profilenden 121 und 131 nur schematisch in 2D-Darstellungen. Es versteht sich von selbst, dass die gezeigten Stoßflächen 122 und 132 entsprechend ausgebildete dreidimensionale Flächenkonturen aufweisen. Ferner können die in den Fig. 3a-d gezeigten Ausführungsmöglichkeiten für Stoßflächen zu weiteren Ausführungsmöglichkeiten verändert oder kombiniert werden.

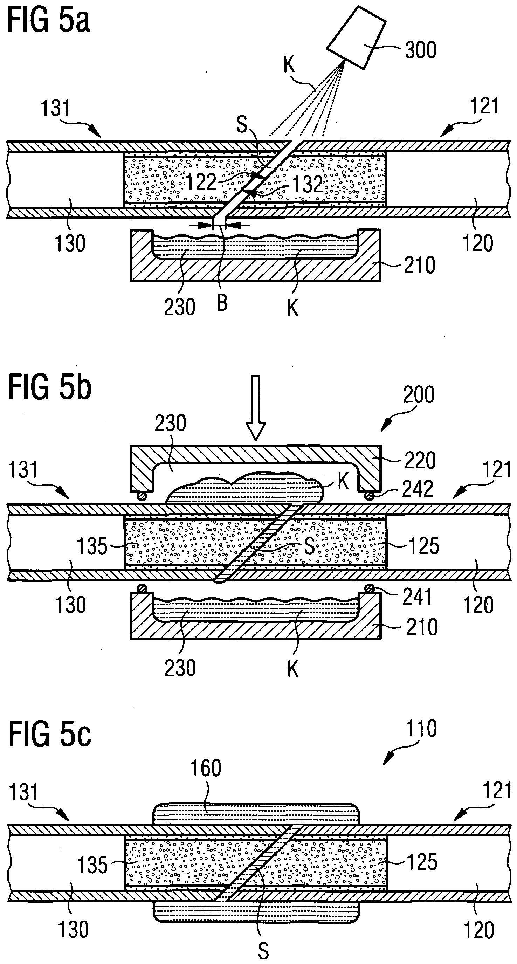

Die in Fig. 3a-d gezeigten korrespondierenden Stoßflächen 122 und 132 sind so ausgebildet, dass diese mit einem homogenen Beabstandungsspalt (siehe Fig. 4 und 5) zueinander angeordnet werden können, wie nachfolgend noch näher erläutert. Ferner können die Stoßflächen 122 und 132 so ausgebildet sein, dass zwischen den zugehörigen Profilbauteilen 120 und 130, trotzt des Beabstandungsspalts, eine verbesserte Kraft- und/oder Momentenübertragung ermöglicht wird.

Fig. 4 zeigt eine Ausgestaltung mit komplex geformten Stoßflächen für drei im Verbindungsknoten 160 zu verbindende Profilenden 121, 131 und 141. Die betreffenden Profilenden 121, 131 und 141 werden durch mechanische Bearbeitung so präpariert, dass speziell geformte Stoßflächen bzw. Fügeflächen entstehen, d. h., es werden korrespondierende Endformen erzeugt. Das Konturieren erfolgt insbesondere derart, dass diese Profilenden 121, 131 und 141 unter Einhaltung homogener Beabstandungsspalte S mit möglichst großen Stoßflächen und möglichst nahe beieinander liegend positioniert werden können. Innerhalb eines Verbindungsknotens können somit mehrere mit unterschiedlichen Flächenkonturen und/oder mit verschiedenen Spaltmaßen ausgebildete Stoßflächenpaarungen vorgesehen sein. Auf diese Weise können auch mehr als zwei Profilenden, mitunter sogar bis zu fünf Profilenden und mehr, unter konstruktiver Berücksichtigung späterer Belastungslastpfade in einem Verbindungsknoten möglichst eng und damit auch platzsparend zusammengebracht werden.

Zur Erzeugung des Verbindungsknotens 160 werden die verschlossenen und mit korrespondierenden Stoßflächen 122 und 132 ausgebildeten Profilenden 121 und 131 der Hohlprofilbauteile 120 und 130 in ein den Verbindungsknoten 160 erzeugendes Presswerkzeug 200 eingelegt, wie in Fig. 5a gezeigt. Bei entsprechender Ausgestaltung des zweiteiligen Presswerkzeugs 200 sind auch andere Verbindungswinkel als der gezeigte 180°-Verbindungswinkel möglich. Das Presswerkzeug 200 ist so ausgebildet, dass eine lagegenaue Fixierung der Profilenden 121 und 131 ermöglicht wird. Die Stoßflächen 122 und 132 der zu verbindenden Profilenden 121 und 131 sind mit einem homogenen bzw. gleichmäßigen Beabstandungsspalt S beabstandet. Das Spaltmaß bzw. die Spaltbreite B beträgt bspw. 0,25 mm bis 3 mm und insbesondere 0,5 mm bis 2,0 mm.

In der Werkzeugkavität 230 des Werkzeugunterteils 210 befindet sich bereits eine vor dem Einlegen und Positionieren der Profilenden 121 und 131 eingebrachte kurzfaserhaltige Kunststoffmasse K. Bei der Kunststoffmasse K handelt es sich bevorzugt um eine duroplastische Kunststoffmasse (Harz). Nach dem Positionieren der zu verbindenden Profilenden 121 und 131 wird auf den Verbindungsbereich weitere kurzfaserhaltige Kunststoffmasse K aufgebracht bzw. aufgespritzt, bspw. mithilfe der gezeigten Sprühvorrichtung 300.

Anschließend wird das Presswerkzeug 200 durch Absenken des Werkzeugoberteils 220 geschlossen, wie in Fig. 5b gezeigt, und ein Pressvorgang ausgeführt. Bei diesem Pressvorgang verteilt sich die definierte Menge der faserhaltigen Kunststoffmasse K in der Kavität 230, wobei die in der Kavität 230 angeordneten Profilenden 121 und 131 der Hohlprofilbauteile 120 und 130 formschlüssig umformt werden und wobei die faserhaltige Kunststoffmasse K auch in den Beabstandungsspalt S hinein gedrückt wird. Dabei bildet sich auch eine stoffschlüssige Verbindung zwischen der den Verbindungsknoten 160 formenden Kunststoffmasse K und den Profilenden 121 und 131 aus. Die Form des Verbindungsknotens 160 ergibt sich durch die Negativform der Werkzeugkavität 230.

Während des Pressvorgangs wirken die Verschlusselemente 125 und 135 als Barrieren und verhindern das Eindringen der faserhaltigen Kunststoffmasse K in die Profilkammern der Hohlprofilbauteile 120 und 130. Dadurch kann sich auch ein hoher definierter Formungsdruck in der Werkzeugkavität 230 ausbilden.

Bei der Erzeugung des Verbindungsknotens 160 werden nur die zu verbindenden Profilenden 121 und 131 in das Presswerkzeug 200 eingelegt, so dass die Hohlprofilbauteile 120 und 130 durch Öffnungen im Presswerkzeug 200 in die Werkzeugkavität 230 hineinragen. Das Presswerkzeug 200 ist so ausgebildet, dass eine lagegenaue Fixierung der Profilenden 121 und 131 ermöglicht wird. Während des Pressvorgangs wird die Abdichtung des Presswerkzeugs 200 mithilfe von Dichtungen 241 und 242 bewerkstelligt. Die druckfesten Verschlusselemente 125 und 135 können im Dichtungsbereich eine Stabilisierung der Hohlprofilwandungen bewirken und die Kavitätsabdichtung verbessern.

Nachdem die vorzugsweise duroplastische Kunststoffmasse K infolge von Druck- und Temperatureinwirkung ausgehärtet ist, kann das Presswerkzeug 200 geöffnet und die hergestellte Knotenstruktur 110 entnommen werden, wie in Fig. 5c gezeigt. Der Verbindungsknoten 160 kann Wandstärken im Bereich von 1 mm bis 15 mm aufweisen, wobei sowohl gleiche als auch unterschiedliche Wandstärken vorgesehen sein können. Die Verschlusselemente 125 und 135 verbessern ohne nennenswertes Mehrgewicht die Festigkeit, Steifigkeit und Crashstabilität der Knotenstruktur 110.

Die kurzfaserhaltige Kunststoffmasse K kann vorgemischt und vor dem Schließen des Presswerkzeugs 200, bspw. mit Hilfe der Sprühvorrichtung 300 oder dergleichen, in die Werkzeugkavität 230 eingebracht werden. Ferner ist ein schichtweises Eintragen möglich, wobei abwechselnd Faserlagen und Kunststofflagen (Harzlagen) eingebracht werden können. Ebenso kann die kurzfaserhaltige Kunststoffmasse K auch nach dem Schließen des Presswerkzeugs 200 durch Injektion (Spritzgießen) in die Werkzeugkavität 230 eingebracht werden.

## Patentansprüche

1. Verfahren zur Herstellung einer Knotenstruktur (110) mit wenigstens zwei, insbesondere aus Faserkunststoffverbundmaterial gebildeten, Profilbauteilen (120, 130), die an einem ihrer Profilenden (121, 131) in einem Verbindungsknoten (160) fest miteinander verbunden werden sollen,
umfassend die Schritte:
- Bereitstellen der vorgefertigten Profilbauteile (120, 130), die an ihren zu verbindenden Profilenden (121, 131) mit korrespondierenden Stoßflächen (122, 132) ausgebildet sind;
- Positionieren der Profilenden (121, 131) in einem den Verbindungsknoten (160) erzeugenden Presswerkzeug (200), derart, dass zwischen den Stoßflächen (122, 132) ein homogener Beabstandungsspalt (S) besteht, wobei der Beabstandungsspalt (S) ein Spaltmaß (B) von 0,25 mm bis 3 mm aufweist;
- Ausführen eines Pressvorgangs unter Zugabe von kurzfaserhaltiger Kunststoffmasse (K) zur Erzeugung eines die Profilenden (121, 131) formschlüssig verbindenden Verbindungsknotens (160), wobei die kurzfaserhaltige Kunststoffmasse (K) vor dem Schließen des Presswerkzeugs (200) in dessen Werkzeugkavität (230) eingebracht wird und beim Pressvorgang auch in den Beabstandungsspalt (S) eindringt.

2. Verfahren nach Anspruch 1,
**dadurch gekennzeichnet, dass**
der Beabstandungsspalt (S) ein Spaltmaß (B) von wenigstens 0,5 mm und höchstens 2 mm aufweist.

3. Verfahren nach Anspruch 1 oder 2,
**dadurch gekennzeichnet, dass**
die Stoßflächen (122, 132) an den Profilenden (121, 131) als gerade Schrägflächen ausgebildet sind.

4. Verfahren nach Anspruch 1 oder 2,
**dadurch gekennzeichnet, dass**
die Stoßflächen (122, 132) an den Profilenden (121, 131) als konkave und konvexe Flächen ausgebildet sind.

5. Verfahren nach Anspruch 1 oder 2,
**dadurch gekennzeichnet, dass**
die Stoßflächen (122, 132) an den Profilenden (121, 131) als gestufte Flächen ausgebildet sind.

6. Verfahren nach Anspruch 1 oder 2,
**dadurch gekennzeichnet, dass**
die Stoßflächen (122, 132) an den Profilenden (121, 131) als ineinander verschachtelbare Flächen ausgebildet sind.

7. Verfahren nach einem der vorausgehenden Ansprüche,
**dadurch gekennzeichnet, dass**
wenigstens eines der Profilbauteile (120, 130) ein Hohlprofilbauteil ist, wobei das offene Profilende (121, 131) dieses Hohlprofilbauteils (120, 130) mittels eines Verschlusselements (125, 135) verschlossen wird, welches während des Pressvorgangs ein Eindringen der faserhaltigen Kunststoffmasse (K) in das Hohlprofilbauteil (120) verhindert.

8. Verfahren nach einem der vorausgehenden Ansprüche,
**dadurch gekennzeichnet, dass**
wenigstens zwei der im Verbindungsknoten (160) miteinander zu verbindenden Profilbauteile (120, 130) unterschiedliche Querschnitte aufweisen.

9. Knotenstruktur (110) für eine Fahrzeugkarosserie, hergestellt mit einem Verfahren gemäß einem der vorausgehenden Ansprüche, mit wenigstens zwei, insbesondere aus Faserkunststoffverbundmaterial gebildeten, Profilbauteilen (120, 130) und einem Verbindungsknoten (160), in dem die Profilbauteile (120, 130) an einem ihrer Profilenden (121, 131) formschlüssig miteinander verbunden sind, wobei die im Verbindungsknoten (160) verbundenen Profilenden (121, 131) mit korrespondierenden Stoßflächen (122, 132) ausgebildet sind und diese Stoßflächen (122, 132) durch einen homogenen, mit kurzfaserhaltiger Kunststoffmasse (K) aufgefüllten Beabstandungsspalt (S) zueinander beabstandet sind, wobei der Beabstandungsspalt (S) ein Spaltmaß (B) von 0,25 mm bis 3 mm aufweist.

10. Fahrzeugkarosserie, insbesondere für einen Personenkraftwagen, mit einem aus Profilbauteilen (120, 130, 140, 150) gebildeten Rahmen (100), der wenigstens eine Knotenstruktur (110) aufweist, die gemäß Anspruch 9 ausgebildet und/oder mit einem Verfahren nach einem der Ansprüche 1 bis 8 hergestellt ist.

## Claims

1. Method for producing a node structure (110) with at least two profile members (120, 130), in particular made of fibre plastic composite material, which should be connected securely with one another at one of their profile ends (121, 131) in a connection node (160),
comprising the steps
- providing the prefabricated profile members (120, 130) which are designed at their profile ends (121, 131), which to be connected, with corresponding abutting surfaces (122, 132);
- a positioning the profile ends (121, 131) in a pressing tool (200) generating the connection node (160) such that between the abutting surfaces (122, 132) there exists a homogeneous spacing gap (S), wherein the spacing gap (S) has a gap measurement (B) of 0.25 mm to 3 mm;
- carrying out a pressing procedure with the addition of short-fibre plastic mass (K) for generating a connection node (160) connecting in form-fitting manner the profile ends (121, 131), wherein prior to the closing of the pressing tool (200) the short-fibre plastic mass (K) is introduced into its tool cavity (230) and during the pressing procedure also penetrates into the spacing gap (S).

2. Method according to claim 1,
**characterised in that**
the spacing gap (S) has a gap measurement (B) of at least 0.5 mm and at most 2 mm.

3. Method according to claim 1 or 2,
**characterised in that**
the abutting surfaces (122, 132) at the profile ends (121, 131) are formed as straight oblique surfaces.

4. Method according to claim 1 or 2,
**characterised in that**
the abutting surfaces (122, 132) at the profile ends (121, 131) are formed as concave and convex surfaces.

5. Method according to claim 1 or 2,
**characterised in that**
the abutting surfaces (122, 132) at the profile ends (121, 131) are formed as stepped surfaces.

6. Method according to claim 1 or 2,
**characterised in that**
the abutting surfaces (122, 132) at the profile ends (121, 131) are formed as surfaces which can be interleaved in one another.

7. Method according to any of the preceding claims,
**characterised in that**
at least one of the profile members (120, 130) is a hollow profile member, wherein the open profile end (121, 131) of this hollow profile member (120, 130) is closed by means of a closing element (125, 135), which during the pressing procedure prevents a penetration of the fibre plastic composite material (K) into the hollow profile member (120).

8. Method according to any of the preceding claims,
**characterised in that**
at least two of the profile members (120, 130) to be connected with one another in the connection node (160) have different cross-sections.

9. Node structure (110) for a vehicle body, produced with a method according to any of the preceding claims, having at least two profile members (120, 130), in particular made of fibre plastic composite material, and a connection node (160) in which the profile members (120, 130) are connected with one another in a form-fitting manner at one of their profile ends (121, 131), wherein the profile ends (121, 131) connected in the connection node (160) are formed with corresponding abutting surfaces (122, 132) and these abutting surfaces (122, 132) are spaced from one another by means of a homogeneous spacing gap (S) filled with short-fibre plastic mass (K), wherein the spacing gap (S) has a gap measurement (B) of 0.25 mm to 3 mm.

10. Vehicle body, in particular for a passenger motor vehicle, having a frame (100) made of profile members (120, 130, 140, 150) which has at least one node structure (110) which is formed according to claim 9 and/or is produced with a method according to any of claims 1 to 8.

## Revendications

1. Procédé de fabrication d'une structure de liaison (110) avec au moins deux composants profilés (120, 130), formés en particulier en matériau composite de matière plastique renforcée de fibres, qui doivent être raccordés solidement l'un à l'autre à une de leurs extrémités profilées (121, 131) dans une liaison de raccord (160),
comprenant les étapes de :
- fourniture des composants profilés préfabriqués (120, 130), qui sont réalisés à leurs extrémités profilées (121, 131) à raccorder avec des surfaces de butée (122, 132) correspondantes ;
- positionnement des extrémités profilées (121, 131) dans un outil de presse (200) générant la liaison de raccord (160), de sorte qu'il y a une fente d'espacement homogène (S) entre les surfaces de butée (122, 132), dans lequel la fente d'espacement (S) présente une dimension de fente (B) de 0,25 mm à 3 mm ;
- réalisation d'une opération de pressage avec ajout de masse de matière plastique contenant des fibres courtes (K) pour la génération d'une liaison de raccord (160) raccordant les extrémités profilées (121, 131) par complémentarité de forme, dans lequel la masse de matière plastique contenant des fibres courtes (K) est introduite avant la fermeture de l'outil de presse (200) dans sa cavité d'outil (230) et lors de l'opération de pressage pénètre aussi dans la fente d'espacement (S).

2. Procédé selon la revendication 1,
**caractérisé en ce que**
la fente d'espacement (S) présente une dimension de fente (B) d'au moins 0,5 mm et maximum 2 mm.

3. Procédé selon la revendication 1 ou 2,
**caractérisé en ce que**
les surfaces de butée (122, 132) sont réalisées aux extrémités profilées (121, 131) en tant que surfaces inclinées droites.

4. Procédé selon la revendication 1 ou 2,
**caractérisé en ce que**
les surfaces de butée (122, 132) sont réalisées aux extrémités profilées (121, 131) en tant que surfaces concaves et convexes.

5. Procédé selon la revendication 1 ou 2,
**caractérisé en ce que**
les surfaces de butée (122, 132) sont réalisées aux extrémités profilées (121, 131) en tant que surfaces étagées.

6. Procédé selon la revendication 1 ou 2,
**caractérisé en ce que**
les surfaces de butée (122, 132) sont réalisées aux extrémités profilées (121, 131) en tant que surfaces imbriquées les unes dans les autres.

7. Procédé selon l'une quelconque des revendications précédentes,
**caractérisé en ce que**
au moins un des composants profilés (120, 130) est un composant profilé creux, dans lequel l'extrémité profilée ouverte (121, 131) de ce composant profilé creux (120, 130) est fermée au moyen d'un élément de fermeture (125, 135), lequel empêche pendant l'opération de pressage une pénétration de la masse de matière plastique contenant des fibres courtes (K) dans le composant profilé creux (120).

8. Procédé selon l'une quelconque des revendications précédentes,
**caractérisé en ce que**
au moins deux des composants profilés (120, 130) à raccorder l'un à l'autre dans la liaison de raccord (160) présentent différentes sections transversales.

9. Structure de liaison (110) pour une carrosserie de véhicule, fabriquée avec un procédé selon l'une quelconque des revendications précédentes, avec au moins deux composants profilés (120, 130), formés en particulier en matériau composite de matière plastique renforcée de fibres, et une liaison de raccord (160), dans laquelle les composants profilés (120, 130) sont raccordés l'un à l'autre à une de leurs extrémités profilées (121, 131) par complémentarité de forme, dans laquelle les extrémités profilées (121, 131) raccordées dans la liaison de raccord (160) sont réalisées avec des surfaces de butée (122, 132) correspondantes et ces surfaces de butée (122, 132) sont espacées l'une de l'autre par une fente d'espacement (S) homogène, remplie de masse de matière plastique contenant des fibres courtes (K), dans laquelle la fente d'espacement (S) présente une dimension de fente (B) de 0,25 mm à 3 mm.

10. Carrosserie de véhicule, en particulier pour une voiture particulière, avec un cadre (100) formé de composants profilés (120, 130, 140, 150), qui présente au moins une structure de liaison (110), qui est réalisée selon la revendication 9 et/ou avec un procédé selon l'une quelconque des revendications 1 à 8.
